# EUROPÄISCHE PATENTSCHRIFT

(11) **EP 1 193 163 B1**
(45) Veröffentlichungstag und Bekanntmachung des Hinweises auf die Patenterteilung: **06.07.2005**
(21) Anmeldenummer: 01128467.6
(22) Anmeldetag: 27.09.1999
(51) Int. Cl.: B62D 29/00

(54) **Verbundbauteil für Fahrzeugkarosserien**
Composite member for vehicle bodies
Elément composite pour carrosseries de véhicule

(30) Priorität: 21.10.1998 DE 19848539
(43) Veröffentlichungstag der Anmeldung: 03.04.2002
(62) Teilanmeldung aus: 99118955.6
(73) Patentinhaber: ArvinMeritor GmbH, 63128 Dietzenbach (DE)
(72) Erfinder: Böhm, Horst, 60599 Frankfurt (DE); Grimm, Rainer, 60599 Frankfurt (DE); Becher, Thomas, 63110 Rodgau (DE)
(74) Vertreter: Sties, Jochen, Dipl.-Ing.

(56) Entgegenhaltungen:
- DE-A- 19 632 550

## Beschreibung

Die Erfindung bezieht sich auf ein Verfahren zur Herstellung eines Verbundbauteils für Fahrzeugkarosserien, insbesondere für Fahrzeugdächer.

Verbundbauteile sind grundsätzlich für alle Flächenbereiche von Fahrzeugkarosserien, einschließlich der Hauben, Türen und Klappen/Deckel, geeignet, für die neben einer ausreichenden Beulsteifigkeit und Festigkeit wie Biegefestigkeit und Torsionsfestigkeit bei geringem Gewicht gute Wärme- und/oder Schallisolationseigenschaften verlangt werden. Wenn nachfolgend von einem Fahrzeugdach bzw. einer Motorhaube die Rede ist, handelt es sich zwar um bevorzugte Anwendungsorte der Erfindung, jedoch ohne darauf einschränkende Bedeutung.

Um bei einem bekannten Dachaufbau (GM 79 29 367 U1) eine ausreichende Beulsteifigkeit zu erreichen, ist ein zunächst getrennter verwindungssteifer Halbzeug-Profilrahmen anzufertigen, der dann an der Dachhaut längs deren Rändern unlösbar zu befestigen ist. Die aufgeschäumte Kunststoffschicht überdeckt auch den mit der Dachhaut unlösbar verbundenen Halbzeug-Profilrahmen. Soll eine aus Leichtmetall oder aus Kunststoff bestehende Dachhaut wirksam gegen Einbeulung versteift werden, ist nach dem bekannten Vorschlag wenigstens eine sich quer zu den Längsholmen des Halbzeug-Profilrahmens erstreckende Profilstrebe vorzusehen. Der bekannte Dachaufbau erfordert einen erheblichen Fertigungs- und Materialaufwand.

DE 196 32 550 beschreibt ein Verfahren zur Herstellung eines Verbundbauteils für Fahrzeugkarosserien, insbesondere für Fahrzeugdächer, mittels der folgenden Schritte:
- es wird eine Außenhaut (1) bereitgestellt;
- der Rand der Außenhaut (1) wird beschnitten;
- auf die Innenseite der Außenhaut wird eine Kunststoffschicht (2) aufgeschäumt, die nach dem Aushärten nicht mehr beschnitten wird.

Entsprechendes gilt für die aus der GB 2 311 966 A bekannten Verbundbauteile für Fahrzeugkarosserien. Gemäß diesem Stand der

Technik werden eine äußere Schale und eine innere Schale für das Verbundbauteil mittels Spritzgießen aus Kunststoff hergestellt und in einem Folgeschritt durch einen Kunststoffschweißvorgang oder unter Zuhilfenahme von Klebstoff entlang ihrer Ränder fest und dicht miteinander verbunden. Dann wird der entstandene Hohlkörper mit einer aushärtenden Füllung aus Kunststoff gefüllt. Alternativ dazu kann auch ein Füllkörper vorgefertigt werden, der zwischen der äußeren und der inneren Schale einzufügen ist, wenn diese miteinander verbunden werden. Für höhere Festigkeitserfordernisse sind Versteifungsteile aus Aluminium im Hohlraum zwischen äußerer und innerer Schale vorzusehen, wobei die äußere Schale mit Kanälen zur Aufnahme der Versteifungsteile ausgebildet ist.

Schließlich sind auch Dächer aus Verbundwerkstoff bekannt (DE 32 02 594 C2), die aus einer luft- und regendichten Außenschicht, einer mittleren, eigensteifen Waben-/Strukturschicht mit Aluminium- oder Pappstegen bzw. halbharten Schaum- und Vliesstrukturen, einer halbsteifen, porösen Innenschicht und einer Polster- und/oder Dekorschicht mittels eines Heißpreßverfahrens gefertigt sind.

Der Erfindung liegt die Aufgabe zugrunde, ein gegenüber dem Stand der Technik vereinfachtes Verfahren zur Herstellung eines Verbundbauteils für Fahrzeugkarosserien bereitzustellen.

Die gestellte Aufgabe wird durch die im Anspruch 1 angegebenen Merkmale gelöst. Vorteilhafte und/oder zweckmäßige Weiterbildungen gehen aus den Unteransprüchen 2 bis 4 hervor.

Mit dem erfindungsgemäßen Verfahren entfällt das Randbeschneiden nach dem Schäumvorgang gänzlich. Vielmehr kann bereits beim Tiefziehen der Außenhaut oder in einem Folgeschritt der nach außen abgewinkelte umlaufende Flanschrand zur Ausbildung einer definierten Abschlußgeometrie der Außenhaut gestanzt oder feingeschnitten werden. Der umlaufende Flanschrand sorgt bei dem dann folgenden Schäumvorgang unter flächiger Anlage an einer Dichtung der Schäumform vorteilhaft für eine gute und saubere Abdichtung der Schäumform. Zwar ist es grundsätzlich möglich, daß die Außenhaut vor dem Schäumvorgang nur eine umlaufende Aufkantung aufweist, ohne einen davon nach außen abgewinkelten Flanschrand, der ggf. bereits entfernt wurde. Jedoch gestaltet sich dann die Abdichtung der Schäumform schwieriger, insbesondere kann die scharfe Abschlußkante der Aufkantung einen negativen Einfluß auf die Standzeit der Dichtung der Schäumform haben.

Im folgenden wird die Erfindung anhand bevorzugter Ausführungsbeispiele unter Bezugnahme auf die beigefügte Zeichnung näher erläutert, wobei gleiche Bezugszahlen den gleichen bzw. entsprechenden Teilen zugeordnet sind. In der Zeichnung zeigen:
- Fig. 1: einen abgebrochenen Schnitt durch den Randbereich eines in einer geschlossenen Schäumform befindlichen Fahrzeugdachs gemäß einem ersten Ausführungsbeispiel,
- Fig. 2: einen abgebrochenen Schnitt durch den Randbereich des fertigen Fahrzeugdachs gemäß dem ersten Ausführungsbeispiel,
- Fig. 3: einen abgebrochenen Schnitt durch den Randbereich eines in einer geschlossenen Schäumform befindlichen, für ein Schiebedach vorgerüsteten Fahrzeugdachs gemäß einem zweiten Ausführungsbeispiel,
- Fig. 4: einen abgebrochenen Schnitt durch den Randbereich eines in einer geschlossenen Schäumform befindlichen Fahrzeugdachs gemäß einem dritten Ausführungsbeispiel,
- Fig. 5: einen abgebrochenen Schnitt durch den Randbereich eines in einer geschlossenen Schäumform befindlichen Fahrzeugdachs gemäß einem vierten Ausführungsbeispiel,
- Fig. 6: einen abgebrochenen Schnitt durch den Randbereich des fertigen Fahrzeugdachs gemäß dem vierten Ausführungsbeispiel, welches an einem Dachrahmen montiert ist,
- Fig. 7: eine schematische Perspektivansicht einer schon an einer PKW-Karosserie angebrachten, ausgebildeten Motorhaube und
- Fig. 8: einen abgebrochenen Schnitt der Motorhaube entsprechend der Linie A-A in Fig. 7.

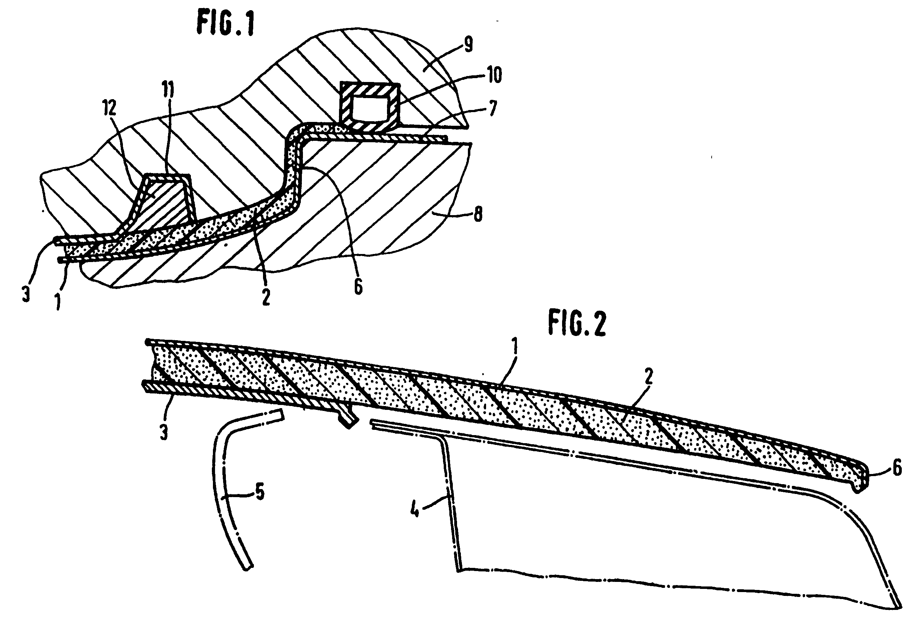

In den Fig. 1 und 2 sind eine tiefgezogene Außenhaut 1, eine der Innenseite der Außenhaut 1 aufgeschäumte Kunststoffschicht 2 und ein dekoratives auf der Sichtseite des Fahrzeugdachs befindliches Flächengebilde 3 ersichtlich. In Fig. 1 ist das Fahrzeugdach für den Schäumvorgang mit seiner Innenseite nach oben gekehrt, während in Fig. 2 das Fahrzeugdach in seiner montierten Lage dargestellt ist. In Fig. 2 sind in strichpunktierten Linien ein Dachrahmen 4 einer Fahrzeugkarosserie und eine Verkleidung 5 für den Dachrahmen 4 schematisch eingezeichnet. Das Fahrzeugdach sitzt dem Dachrahmen 4 von oben auf und ist mit diesem auf nicht dargestellte bekannte Weise verbunden.

Dieses Fahrzeugdach ist nicht mit dem Verfahren gemäß Anspruch 1 hergestellt.

Die Außenhaut 1 ist an ihren Rändern, von denen in den Figuren 1 und 2 stellvertretend für die anderen Ränder nur ein Rand dargestellt ist, mit einer umlaufenden Aufkantung 6 versehen, die bei diesem Ausführungsbeispiel zunächst für die Herstellung des Fahrzeugdachs eine größere Höhe (Fig. 1) aufweist als nach dem Randbeschneiden (Fig. 2). Wie aus Fig. 1 hervorgeht, geht die umlaufende Aufkantung 6 in einen davon nach außen abgewinkelten umlaufenden Flanschrand 7 über, der hier ebenso wie ein erheblicher Teil der Aufkantung 6 bei dem späteren Randbeschneidungsvorgang entfernt wird, wie sich aus einem Vergleich der Figuren 1 und 2 ergibt.

Die in Fig. 1 dargestellte Schäumform besteht aus einem die tiefgezogene Außenhaut 1 formschlüssig aufnehmenden Unterteil 8 und einem komplementären Oberteil 9, in dessen Randbereich eine aufblasbare umlaufende Dichtung 10 angeordnet ist, welche für eine Begrenzung des aufschäumenden die Kunststoffschicht 2 bildenden Kunststoffs sorgt. Das dekorative Flächengebilde 3 ist in aufgespannter Form mittels eines in einer Nut 11 des Oberteils 9 eingesetzten Spannrahmens 12 vorübergehend am Oberteil 9 der Schäumform befestigt.

Bei der Herstellung des Fahrzeugdachs wird zunächst die Außenhaut 1 tiefgezogen, im Falle der Verwendung eines Metallblechmaterials durch mehrstufiges hydraulisches Tiefziehen und im Falle der Verwendung einer Kunststoffolie durch Vakuumtiefziehen bei entsprechender Aufspannung des Folienrands. Im letzteren Fall werden beide Seiten der tiefzuziehenden Kunststoffolie durch Heizelemente auf etwa 180°C Oberflächentemperatur erwärmt. Die so erwärmte Kunststoffolie wird dem Vakuumtiefziehvorgang unterworfen.

Der tiefgezogene Vorformling der Außenhaut 1 wird danach mit seiner Innenseite nach oben weisend in das Unterteil 8 der in Fig.1 dargestellten Schäumform eingelegt, worauf der aufschäumbare Kunststoff auf die weiter vorn angegebene Weise auf die Innenseite der Außenhaut 1 aufgebracht wird. Falls es sich um eine Außenhaut aus Kunststoffolie handelt, kann diese zuvor durch Abflämmen aktiviert werden. Als Schaumkunststoff wird beispielsweise ein Schaumsystem der Firma Elastogran verwendet, bestehend aus Polyol B 237 und Isocyanat E 3509, wobei diese beiden Komponenten im Mischungsverhältnis von 100 Teile Polyol zu 210 Teile Isocyanat angewendet werden. Nach dem Auftrag der aufschäumbaren Kunststoffmasse nach dem LFI-Verfahren wird das Oberteil 9 der Form mit dem daran befestigten Flächengebilde 3 in Position gebracht, worauf der mit Glasfasern beladene aufschäumende Kunststoff den gesamten Freiraum der Schäumform bis auf die Oberseite des Flanschrands 7 und dort begrenzt durch die aufgeblasene Dichtung 10 füllt.

Beispielsweise werden 3,7 kg der Schaumkunststoffkomponenten mit 1 kg Glasfasern gemischt, was einem Glasanteil im Schaumkunststoff von < 25 Gew.% entspricht.

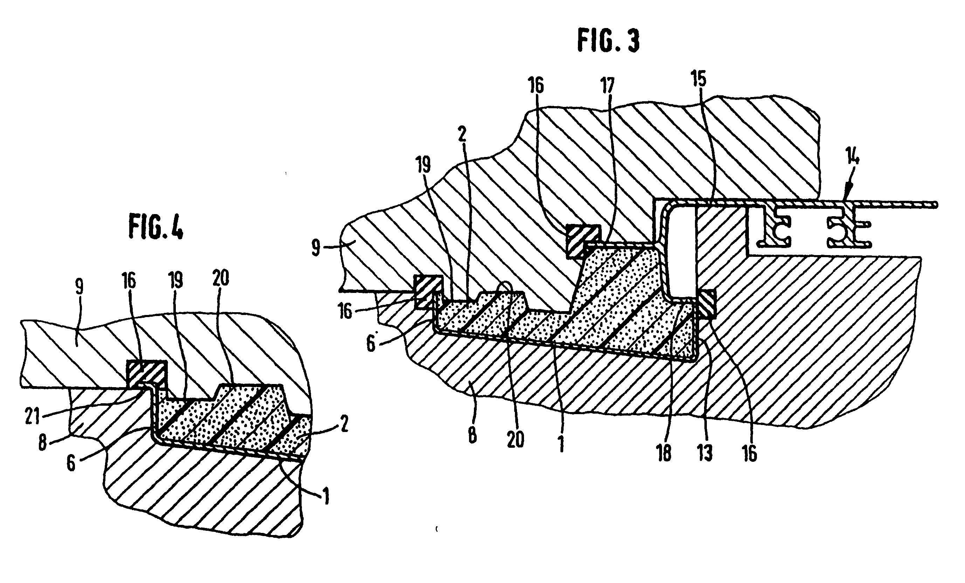

Das in Fig. 3 in der Schäumform befindliche Fahrzeugdach gemäß dem zweiten Ausführungsbeispiel soll nachfolgend nur hinsichtlich der sich vom ersten Ausführungsbeispiel unterscheidenden Merkmale beschrieben werden.

Neben der äußeren umlaufenden Aufkantung 6 besitzt bei diesem Ausführungsbeispiel die Außenhaut 1 auch eine innere umlaufende Aufkantung 13, die in der gleichen Richtung wie die Aufkantung 6 abgewinkelt ist und im fertigen Zustand des Fahrzeugdachs eine Dachöffnung begrenzt, welche mittels eines nicht gezeigten Schiebedeckels wahlweise abgedeckt werden kann. Die wie beschrieben armierte Kunststoffschicht 2 erstreckt sich bis an die Aufkantungen 6 und 13 heran, wodurch das Fahrzeugdach eine ausreichende Steifigkeit erhält.

Weiterhin ist zu erkennen, daß sich im in der Schäumform befindlichen Zustand weder an die Aufkantung 6 noch an die Aufkantung 13 ein nach außen bzw. nach innen abgewinkelter Flanschrand anschließt. Hier erfolgt ein innerer und äußerer Randbeschnitt der Außenhaut 1, bei dem auch nach dem Tiefziehvorgang ggf. noch vorhandene Flanschränder der Außenhaut 1 entfernt werden, bevor die Außenhaut 1 in das Unterteil 8 der Schäumform eingelegt wird. Zweckmäßig kann die Aufkantung 6 der in das Unterteil 8 der Schäumform eingelegten Außenhaut 1 geringfügig über das Unterteil 8 vorstehen.

Nach Einlegen der Außenhaut 1 in das Unterteil 8 der Schäumform wird ein an sich bekanntes, vorzugsweise aus einer Aluminiumlegierung stranggepreßtes Führungsprofil 14, welches Bestandteil einer Mechanik zum Verschieben des Schiebedeckels ist, ebenfalls in das Unterteil 8 der Schäumform eingelegt. Dieses bündig mit der Aufkantung 13 abschließende Führungsprofil 14 begrenzt im dargestellten geschlossenen Zustand der Schäumform den sich durch den aufschäumenden Kunststoff füllenden Hohlraum in der Schäumform, wobei das Führungsprofil 14 mit einem Schenkel 15 zwischen dem Unterteil 8 und dem Oberteil 9 der Schäumform unverrückbar festgelegt ist. Um zu verhindern, daß beim Schäumvorgang der mit Glasfasern beladene aufschäumende Kunststoff zwischen dem Unterteil 8 und dem Oberteil 9 der Schäumform aus- bzw. durchtritt, sind aus vorzugsweise EPDM bestehende Dichtungen 16 mit geeignetem Querschnitt an den Enden der Aufkantungen 6, 13 und an Endabschnitten 17, 18 des Führungsprofils 14 im Unterteil 8 bzw. im Oberteil 9 der Schäumform vorgesehen. Schließlich werden durch geeignete Ausbildung des Oberteils 9 der Schäumform eine Nut 19 sowie eine Auflagefläche 20 als Funktionsabschnitte des Fahrzeugdachs beim Schäumvorgang gleich mit erzeugt. Die Nut 19 dient bei Montage des modulartigen Fahrzeugdachs am Fahrzeug der Aufnahme einer Klebstoffraupe, mittels der das Fahrzeugdach am fahrzeugseitigen Dachrahmen befestigt wird, während die Auflagefläche 20 im montierten Zustand des Fahrzeugdachs dem Dachrahmen definiert aufliegt.

Im fertigen Zustand des Fahrzeugdachs ist das Führungsprofil 14 flächig an der Kunststoffschicht 2 angeschäumt, so daß das Führungsprofil 14 fest mit dem Fahrzeugdach verbunden ist, ohne daß weitere Befestigungsmittel notwendig wären. Besonders hervorzuheben ist hier noch, daß dieses für einen Schiebedeckel vorgerüstete Fahrzeugdach infolge seiner Ausbildung mit umlaufenden Aufkantungen 6, 13 an der Außenhaut 1 und sich dazwischen erstreckender, wie oben beschrieben armierter Kunststoffschicht 2 gänzlich ohne den im Stand der Technik üblichen Verstärkungsrahmen auskommt, der dort die Dachöffnung umgibt und an dem herkömmlicherweise die Führungsprofile für den Schiebedeckel befestigt sind.

Das in Fig. 4 gezeigte dritte Ausführungsbeispiel unterscheidet sich von dem unter Bezugnahme auf die Fig. 3 beschriebenen zweiten Ausführungsbeispiel dadurch, daß die Aufkantung 6 der Außenhaut 1 in einen davon nach außen abgewinkelten umlaufenden Flanschrand 21 übergeht. Im Gegensatz zum ersten Ausführungsbeispiel gemäß Fig. 1 ist der umlaufende Flanschrand 21 so kurz ausgebildet, daß er beim Aufschäumen der armierten Kunststoffschicht 2 auf der Innenseite der Außenhaut 1 der Dichtung 16 im Oberteil 9 der Schäumform über seine gesamte Breite flächig anliegt. Da der Flanschrand 21 dabei dem Unterteil 8 der Schäumform aufliegt, wird er im geschlossenen Zustand der Schäumform in die Dichtung 16 hineingedrückt. Im Ergebnis wird die Schäumform für den Schäumvorgang zwischen dem Unterteil 8 und dem Oberteil 9 zuverlässig abgedichtet, ohne daß die Gefahr besteht, daß die Aufkantung 6 bzw. der Flanschrand 21 die Dichtung 16 beschädigt. Auch bei diesem Ausführungsbeispiel erfolgt ein Randbeschnitt der Außenhaut 1 bevor diese in das Unterteil 8 der Schäumform eingelegt wird. Der Randbeschnitt kann gleichzeitig mit dem Tiefziehen der Außenhaut 1 oder in einem Folgeschritt dazu durch Stanzen oder Feinschneiden ausgeführt werden.

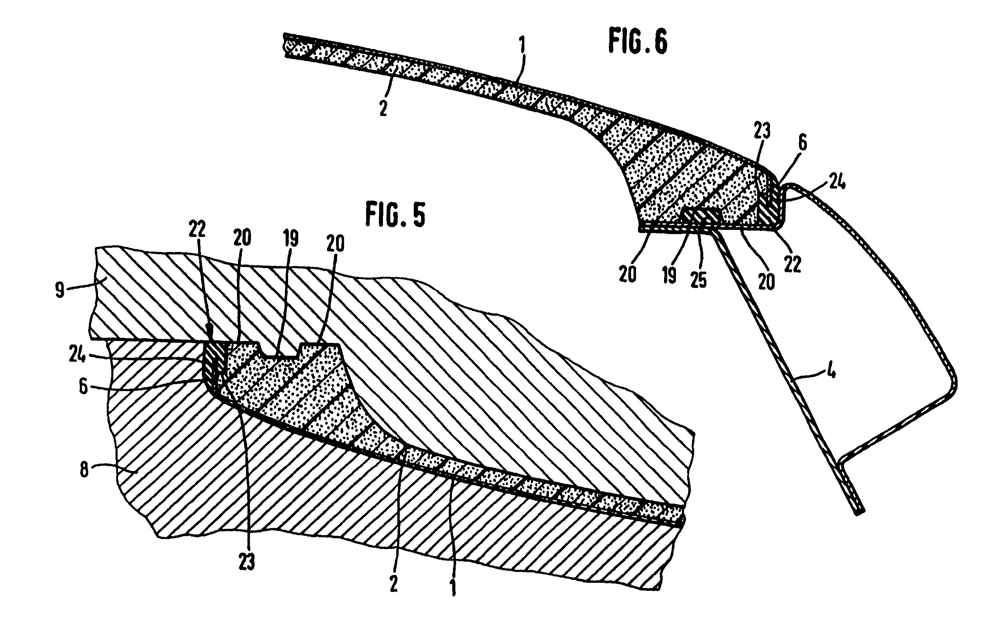

Bei dem in den Fig. 5 und 6 dargestellten vierten Ausführungsbeispiel ist auf die umlaufende Aufkantung 6 der Außenhaut 1 eine ebenfalls umlaufende Dichtung 22 aufgesteckt, die einen zweischenkligen, im wesentlichen U-förmigen Querschnitt aufweist. Gemäß Fig. 5 wird die Dichtung 22 schon beim Aufschäumen der Kunststoffschicht 2 auf der bereits randbeschnittenen Außenhaut 1 mit an die Kunststoffschicht 2 angeschäumt, und zwar mit ihrem inneren Schenkel 23, der sich allerdings nur über einen Teil der Gesamthöhe der Aufkantung 6 erstreckt, damit die armierte Kunststoffschicht 2 auch bis zur Aufkantung 6 reichen kann. Beim Schäumvorgang dient die Dichtung 22 vorteilhaft bereits als Abdichtelement zwischen dem Unterteil 8 und dem Oberteil 9 der Schäumform.

Wie in Fig. 6 zu erkennen ist, bildet der äußere Schenkel 24 der Dichtung 22 im an der Fahrzeugkarosserie montierten Zustand des Fahrzeugdachs zum einen eine Dichtungsfläche aus, um zwischen Fahrzeugdach und Dachrahmen 4 abzudichten. Zum anderen hat der äußere Schenkel 24 der Dichtung 22 aufgrund seiner Elastizität eine das Fahrzeugdach bezüglich des Dachrahmens 4 zentrierende Wirkung. Die Dichtung 22 besteht im übrigen aus einem Werkstoff, der den insbesondere thermischen und mechanischen Beanspruchungen in der Schäumform und im am Fahrzeug montierten Zustand des Fahrzeugdachs hinreichend widerstehen kann, z.B. Moosgummi oder EPDM. Die Fig. 6 veranschaulicht schließlich noch, wie das Fahrzeugdach mittels einer in der Nut 19 aufgenommenen Klebstoffraupe 25 mit dem Dachrahmen 4 der Fahrzeugkarosserie verbunden ist.

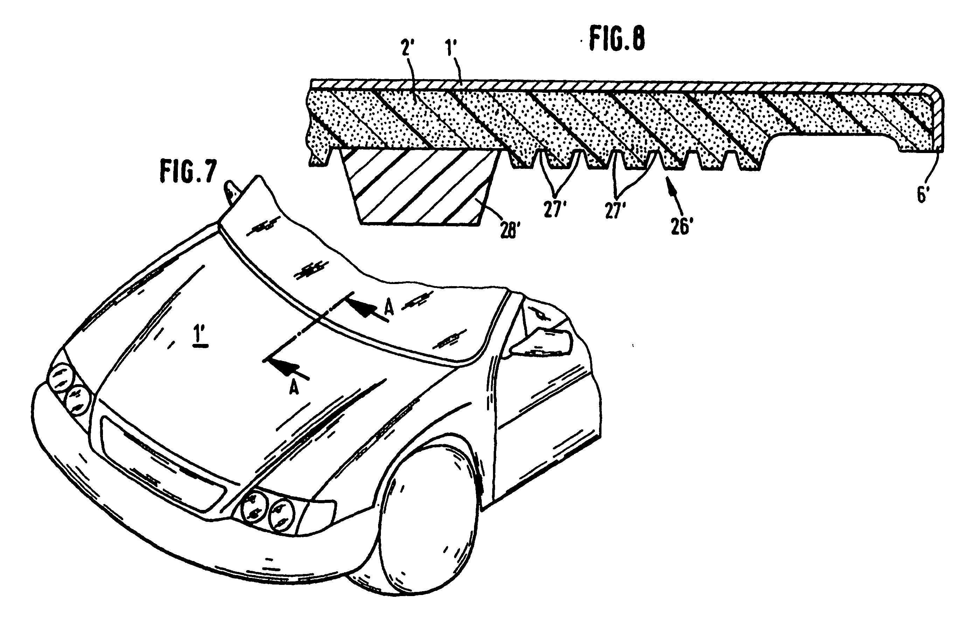

Es wurde bereits eingangs erwähnt, daß nicht nur Fahrzeugdächer, sondern beliebige Flächenbereiche von Fahrzeugkarosserien durch wie beschrieben aufgebaute Verbundbauteile ausgebildet werden können. Exemplarisch dafür ist in den Fig. 7 und 8 noch eine Motorhaube dargestellt, deren tiefgezogene Außenhaut 1' an ihren Rändern rahmenlos ausgebildet und mit einer umlaufenden Aufkantung 6' versehen ist, wobei die auf die Innenseite der Außenhaut 1' aufgeschäumte Kunststoffschicht 2', in der über den gesamten Flächenbereich der Außenhaut 1' eine an sich nicht steife Armierung vorgesehen ist, bis zu der umlaufenden Aufkantung 6' reicht.

Ferner sind in Fig. 8 Maßnahmen dargestellt, die insbesondere die Schallisolationseigenschaften solcher Verbundbauteile noch verbessern. So kann entsprechend der Nut 19 bei den unter Bezugnahme auf die Fig. 3 bis 6 beschriebenen Ausführungsbeispielen, d.h. durch entsprechende Ausbildung des Oberteils der Schäumform bereits beim Aufschäumen der Kunststoffschicht 2' auf der Innenseite der Außenhaut 1' auf der von der Außenhaut 1' abgelegenen Seite der Kunststoffschicht 2' eine schallabsorbierende Oberflächenstruktur 26' hinterschäumt werden, die in dem hier dargestellten Ausführungsbeispiel eine Mehrzahl von parallelen, die Schallreflexion beeinflussenden Nuten 27' aufweist. Ebenso ist es möglich, an diejenige Seite der Kunststoffschicht 2', welche von der Außenhaut 1' abgelegen ist, in einem zweiten Schuß partiell Dämpfungsbereiche 28' mit verminderter Dichte des PUR-Schaummaterials anzuschäumen, wobei eine poröse bzw. offenzellige Mikrostruktur der Oberfläche erzielt werden kann.

## Patentansprüche

1. Verfahren zur Herstellung eines Verbundbauteils für Fahrzeugkarosserien, insbesondere für Fahrzeugdächer, mittels der folgenden Schritte:
- es wird eine Außenhaut (1) mit einer umlaufenden Aufkantung bereitgestellt;
- der Rand der Außenhaut (1) wird beschnitten;
- auf die Innenseite der Außenhaut wird eine Kunststoffschicht (2) aufgeschäumt, die nach dem Aushärten nicht mehr beschnitten wird.

2. Verfahren nach Anspruch 1, **dadurch gekennzeichnet, daß** die Kunststoffschicht (2) in einer Schäumform aufgeschäumt wird und daß eine Dichtung (16; 22) in der Schäumform vorgesehen ist, die am Randbereich der Außenhaut abdichtet.

3. Verfahren nach Anspruch 2, **dadurch gekennzeichnet, daß** die Dichtung (16) an der Schäumform angebracht ist.

4. Verfahren nach Anspruch 2, **dadurch gekennzeichnet, daß** die Dichtung (22) an der Außenhaut (1) angebracht ist.

## Claims

1. A method of producing a composite component for vehicle bodies, in particular for vehicle roofs, by means of the following steps:
an outer skin (1) having a surrounding folded portion is provided;
the edge of the outer skin (1) is cut to size;
a foamed plastic layer (2) is applied on the inside of the outer skin, which plastic layer is not any more cut to size after curing.

2. The method according to claim 1, **characterized in that** the plastic layer (2) is foamed in a foaming mold and a seal (16; 22) is provided in the foaming mold, which seals off in the edge area of the outer skin.

3. The method according to claim 2, **characterized in that** the seal (16) is mounted to the foaming mold.

4. The method according to claim 2, **characterized in that** the seal (22) is mounted to the outer skin (1).

## Revendications

1. Procédé de fabrication d'un élément composite pour des carrosseries de véhicule, en particulier pour des toits de véhicule, à l'aide des étapes suivantes :
- on dispose une peau ou un revêtement extérieur (1) présentant un repli ou rebord périphérique ;
- on détoure le bord du revêtement extérieur (1) ;
- on applique par moussage sur la face intérieure du revêtement extérieur une couche alvéolaire en matière synthétique (2), qui après le durcissement ne sera plus détourée.

2. Procédé selon la revendication 1, **caractérisé en ce que**, la couche de matière synthétique (2) est moulée en matière alvéolaire dans un moule de moussage et **en ce qu'**est prévu dans le moule de moussage un joint d'étanchéité (16, 22), qui assure l'étanchéité du revêtement extérieur sur la zone de bordure.

3. Procédé selon la revendication 2, **caractérisé en ce que** le joint d'étanchéité (16) est appliqué sur le moule de moussage.

4. Procédé selon la revendication 2, **caractérisé en ce que** le joint d'étanchéité (22) est appliqué sur le revêtement extérieur (1).
